# EUROPEAN PATENT APPLICATION

(11) **EP 4 835 433 A1**
(43) Date of publication of application: **04.11.2026**
(21) Application number: 25210495.5
(22) Date of filing: 22.10.2025
(51) Int. Cl.: G01M 17/02

(54) **METHOD AND DEVICE FOR TESTING ROLLING RESISTANCE BY REGION**

(30) Priority: 28.04.2025 CN 202510544417
(71) Applicant: Shandong Linglong Tire Co., Ltd., Yantai, Shandong 265400 (CN)
(72) Inventor: WANG, Feng, Yantai, 265400 (CN); LIANG, Shoujie, Yantai, 265400 (CN); WANG, Chengyuan, Yantai, 265400 (CN); WEI, Jianfeng, Yantai, 265400 (CN); LIU, Lu, Yantai, 265400 (CN); LI, Shiquan, Yantai, 265400 (CN); WU, Cuiping, Yantai, 265400 (CN)
(74) Representative: Metida

(57) **Abstract**

A method and a device for testing rolling resistance by region are provided, and belong to the technical field of regional testing. The method includes: S1, selecting a target tire as a test sample, and obtaining basic parameters of the target tire; S2, longitudinally partitioning a tire tread of the target tire to obtain five tire tread regions, and numbering each of the tire tread regions; S3, based on a rolling resistance testing device and shielding materials, respectively measuring rolling resistance values of left, right, shoulder and middle tire pattern regions in groups; and S4, evaluating resistance of the target tire according to the rolling resistance values combined with tire patterns. The test accuracy is improved and the tire performance is optimized.

## Description

### TECHNICAL FIELD

The disclosure relates to the technical field of regional testing, and in particular to a method and a device for testing rolling resistance by region.

### BACKGROUND

At present, with the gradual improvement of the penetration rate of new energy vehicles, the demand for tires with high cross-section and wide width continues to grow, and higher requirements are put forward for the rolling resistance performance of tires. The existing technology only tests the rolling resistance of the whole tire tread region, but the rolling resistance borne by each longitudinal region is not clear. Automobile manufacturers and tire suppliers should conduct research and development in this field to meet the market demand for high-performance, environmentally-friendly and safe cars.

Moreover, for some high-performance tires with high cross-section width and low flatness ratio, it is particularly important to optimize the rolling resistance performance of tires. In view of the rise of new energy electric vehicles, it is more urgent to improve the rolling resistance performance of tires because of the larger vehicle weight.

Therefore, a method and a device for testing rolling resistance by region are provided.

### SUMMARY

A method and device for testing rolling resistance by region are provided, which may measure and refine the rolling resistance of each longitudinal pattern region, and develop a tire pattern structure with lower rolling resistance and better performance.

On the one hand, a method for testing rolling resistance by region is provided, and includes:
S 1, selecting a target tire as a test sample, and obtaining basic parameters of the target tire;
S2, longitudinally partitioning a tire tread of the target tire to obtain five tire tread regions, and numbering each of the tire tread regions;
S3, based on a rolling resistance testing device and shielding materials, respectively measuring rolling resistance values of left, right, shoulder and middle tire pattern regions in groups; and
S4, evaluating resistance of the target tire according to the rolling resistance values combined with tire patterns.

On the other hand, selecting a target tire as a test sample and obtaining basic parameters of the target tire include:
determining a test target and selecting tire types according to the test target;
selecting a representative target tire as the test sample among the tire types;
obtaining the basic parameters of the target tire according to factory information of the target tire.

On the other hand, before the longitudinally partitioning a tire tread of the target tire includes:
obtaining a tire tread original image of the target tire based on an image acquisition device;
performing grayscale processing on the tire tread original image to obtain a first image, and mapping the first image into a standard coordinate system;
performing Gaussian filtering on the first image, and obtaining gradient of each of pixel points: [0019]
   $G \left(x, y\right) = \sqrt{{\left(\frac{\partial g \left(x, y\right)}{\partial x}\right)}^{2} + {\left(\frac{\partial g \left(x, y\right)}{\partial y}\right)}^{2}} + T \left(\frac{\frac{\partial g \left(x, y\right)}{\partial y}}{\frac{\partial g \left(x, y\right)}{\partial x}}\right) ;$
   where, G(x, y) represents a gradient amplitude value of a pixel point (x,y), g(x, y) represents a grayscale value of the pixel point (x,y), $\frac{\partial g \left(x, y\right)}{\partial x}$ represents a gradient of the pixel point (x,y) in an x direction, $\frac{\partial g \left(x, y\right)}{\partial y}$ represents a gradient of the pixel point (x,y) in a y direction, and T( ) represents a direction conversion function;
based on gradient of each of the pixel points in the first image, performing convolution operation in combination with a preset convolution kernel to obtain smooth pixel points, and forming a second image based on all the smooth pixel points;
scanning an adjacent pixel group of the second image with each preset size by using a gradient factor, and if gradient of one of the pixel points in the adjacent pixel group is not a local maximum value, suppressing gradient of a corresponding pixel point to 0 to obtain extreme value pixel points;
forming pattern images of the target tire based on all extreme value pixel points.

On the other hand, longitudinally partitioning a tire tread of the target tire to obtain five tire tread regions, and numbering each of the tire tread regions include:
according to the basic parameters of the target tire, dividing the pattern images into a left shoulder, a right shoulder and a central pattern, and respectively regarding the left shoulder and the right shoulder as a first region and a second region;
performing symmetry analysis on the central pattern, where the symmetry analysis includes central symmetry analysis and axial symmetry analysis;
based on distribution and symmetry of the central pattern, dividing the central pattern from a central point of a central pattern image to both sides;
according to a preset center width and preset both sides widths, symmetrically dividing the central pattern into a left image, a central image and a right image, regarding as a third region, a fourth region and a fifth region respectively.

On the other hand, respectively measuring rolling resistance values of left, right, shoulder and middle tire pattern regions in groups based on a rolling resistance testing device and shielding materials includes:
selecting materials with performance meeting preset standards as the shielding materials;
cutting the shielding materials based on a preset central width, a preset unilateral width and a shoulder width to obtain a first material;
shielding the first region and the third region of the target tire with the first material to obtain a tire measurable right region, and performing a rolling resistance test on the tire measurable right region to obtain a first rolling resistance value;
shielding the second region and the fifth region of the target tire with the first material to obtain the tire measurable left region, and performing a rolling resistance test on the tire measurable left region to obtain a second rolling resistance value.

On the other hand, respectively measuring rolling resistance values of left, right, shoulder and middle tire pattern regions in groups based on a rolling resistance testing device and shielding materials further includes:
cutting the shielding materials according to the preset central width, a preset both-sides total width and the shoulder width to obtain a second material;
shielding the first region, the third region, the fourth region and the fifth region of the target tire with the second material to obtain a tire measurable right shoulder region, and performing a rolling resistance test on the tire measurable right shoulder region to obtain a third rolling resistance value;
shielding the second region, the third region, the fourth region and the fifth region of the target tire with the second material to obtain a tire measurable left shoulder region, and performing a rolling resistance test on the tire measurable left shoulder region to obtain a fourth rolling resistance value;
cutting the shielding materials according to the preset central width, the preset both-sides total width and the shoulder width to obtain a third material;
shielding the first region, the second region, the third region and the fifth region of the target tire with the third material to obtain a tire measurable central region, and performing a rolling resistance test on the tire measurable central region to obtain a fifth rolling resistance value.

On the other hand, evaluating resistance of the target tire according to the rolling resistance values combined with tire patterns includes:
according to five rolling resistance values of the target tire, calculating the resistance of the target tire by combining the tire patterns:
   $C = \frac{{C}_{rr} \left(v\right) \times \left(1+k\times \frac{v}{{v}_{0}}\right) + {\sum }_{i = 1}^{5} {σ}_{i} \left({C}_{rr , 0}\times \left(1+α\times {Df}_{i}\right)+f\left(N\right)\right)}{2} ;$
where, C represents the resistance of the target tire, σᵢ represents a preset weight coefficient of an i-th rolling resistance value, C_{rr,0} represents a standard tire rolling resistance coefficient, α represents an influence factor of tire material on rolling resistance values, Dfᵢ represents a pattern proportion of the i-th rolling resistance value corresponding to a rolling resistance region, N represents a rated load gravity of the target tire, f( ) represents a load function, Cᵣᵣ(v) represents a rolling resistance coefficient corresponding to speed v in the rolling resistance testing device, k represents a conversion coefficient related to a speed ratio, and v₀ represents a specified standard speed of the target tire;
if the resistance of the target tire is greater than a preset resistance, the tire patterns of the target tire are determined to be unqualified, otherwise, the tire patterns of the target tire are determined to be qualified.

On the other hand, a device for testing rolling resistance by region is provided, and includes:
a basic parameter module, configured for selecting a target tire as a test sample, and obtaining basic parameters of the target tire;
a partition module, configured for longitudinally partitioning a tire tread of the target tire to obtain five tire tread regions, and numbering each of the tire tread regions;
a measuring module, configured for respectively measuring rolling resistance values of left, right, shoulder and middle tire pattern regions in groups based on a rolling resistance testing device and shielding materials; and
an evaluation module, configured for evaluating resistance of the target tire according to the rolling resistance values.

Compared with the prior art, the disclosure has the following beneficial effects:
The method and the device for testing rolling resistance by region provided by the disclosure, the rolling resistance of each longitudinal pattern region is measured and refined, and a tire pattern structure with lower rolling resistance and better performance is developed.

### BRIEF DESCRIPTION OF THE DRAWINGS

In order to explain the technical scheme of the disclosure or the prior art more clearly, the drawings needed to be used in the description of the embodiments or the prior art will be briefly introduced below. Obviously, the drawings in the following description are some embodiments of the disclosure, and other drawings may be obtained according to these drawings without creative efforts for ordinary skilled in the field.
FIG. 1 is a schematic flow diagram of a method for testing rolling resistance by region according to an embodiment of the disclosure;
FIG. 2 is a schematic structural diagram of a device for testing rolling resistance by region according to an embodiment of the disclosure;
FIG. 3 is a schematic diagram of five regions after longitudinal partition;
FIG. 4 is a schematic diagram of the tire measurable right region;
FIG. 5 is a schematic diagram of the tire measurable left region;
FIG. 6 is a schematic diagram of the tire measurable right shoulder region; and
FIG. 7 is a schematic diagram of the tire measurable central region.

### DETAILED DESCRIPTION OF THE EMBODIMENTS

In order to make the purpose, technical scheme and advantages of the disclosure more clear, the technical scheme in the disclosure will be described clearly and completely with reference to the attached drawings in the disclosure. Obviously, the described embodiments are part of the embodiments of the disclosure, but not all of embodiments. Based on the embodiments in the disclosure, all other embodiments obtained by ordinary skilled in the field without creative efforts belong to the scope of protection of the disclosure.

### Embodiment 1

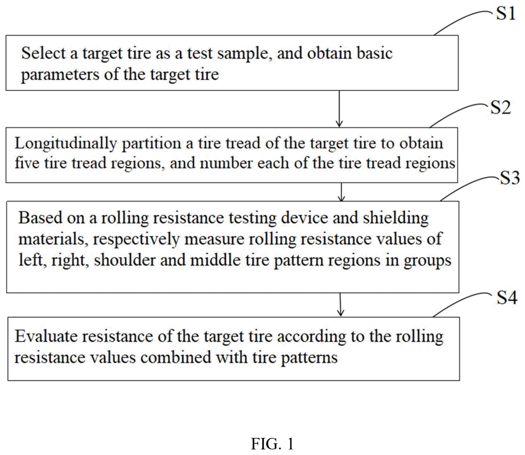

As shown in FIG. 1, a method for testing rolling resistance by region is provided, and includes:
S1, a target tire is selected as a test sample, and basic parameters of the target tire are obtained;
S2, a tire tread of the target tire is longitudinally partitioned to obtain five tire tread regions, and each of the tire tread regions is numbered;
S3, based on a rolling resistance testing device and shielding materials, rolling resistance values of left, right, shoulder and middle tire pattern regions are respectively measured in groups; and
S4, resistance of the target tire ia evaluated according to the rolling resistance values combined with tire patterns.

In this embodiment, the target tire refers to a specific tire as a sample in the test.

In this embodiment, the basic parameters refer to the basic characteristics and specifications of the tire, including tire size, tire model, load index, etc.

In this embodiment, the longitudinal partition refers to dividing the tire tread in the longitudinal direction (that is, parallel to the tire running direction).

In this embodiment, the tread region refers to the part where the tire contacts the ground, that is, the surface pattern region of the tire.

In this embodiment, numbering refers to assigning a specific number to each of the five regions of the tire.

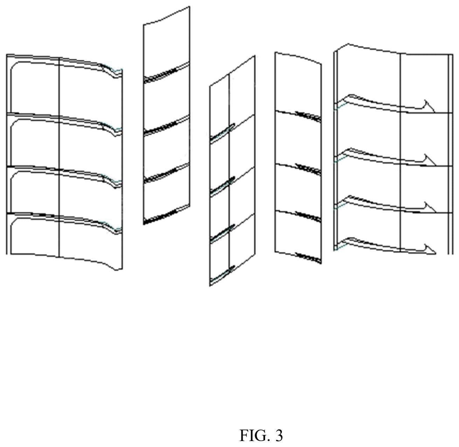

In this embodiment, as shown in FIG. 3, the divided five tire tread regions are shown in the figure.

In this embodiment, the rolling resistance testing device measures the rolling resistance by simulating the actual contact between the tire and the ground, using special test wheels and ground materials.

In this embodiment, the shielding materials are materials with low friction coefficient, high and low temperature resistance and strong plasticity, such as polytetrafluoroethylene (friction coefficient is only 0.04) or a metal material with lower friction coefficient.

In this embodiment, the rolling resistance value refers to the resistance caused by tire deformation, friction and other factors when the tire is in contact with the ground and rolling.

In this embodiment, the tire pattern regions refer to different pattern regions on the tire tread of the tire.

The working principle and beneficial effects of the above technical scheme are as follows: the tire tread of the tire is divided into regions, and the rolling resistance value of each of the regions is measured by using rolling resistance testing device, and the tire resistance is evaluated by combining the pattern characteristics, so that the tire performance may be accurately analyzed, the design may be optimized, and the fuel efficiency and performance may be improved, which has obvious energy saving and environmental benefits.

### Embodiment 2

On the basis of the above Embodiment 1, selecting a target tire as a test sample and obtaining basic parameters of the target tire include:
a test target is determined and tire types are selected according to the test target;
a representative target tire is selected as the test sample among the tire types;
the basic parameters of the target tire are obtained according to factory information of the target tire.

In this embodiment, the test target refers to the specific objectives to be achieved and the indicators to be evaluated when testing the tire performance.

In this embodiment, the tire types are classified according to the design, use, structure and performance of tires, such as off-road tires, traction tires, road tires and so on.

In this embodiment, representativeness means that the selected tire may represent most tire characteristics of a specific type, ensuring that the test results have wide applicability.

In this embodiment, the factory information refers to the detailed technical and specification information about the tire provided by the manufacturer in the production process.

The working principle and beneficial effects of the above technical scheme are as follows: by defining the test target, selecting a representative target tire and obtaining basic parameters, accurate data support is provided for subsequent tests. Through this process, the scientific and accurate test results may be ensured, the tire design may be optimized, and the performance and fuel efficiency may be improved.

### Embodiment 3

On the basis of the above Embodiment 1, before the longitudinally partitioning a tire tread of the target tire includes:
a tire tread original image of the target tire is obtained based on an image acquisition device;
grayscale processing is performed on the tire tread original image to obtain a first image, and the first image is mapped into a standard coordinate system;
Gaussian filtering is performed on the first image, and gradient of each of pixel points is obtained:
   $G \left(x, y\right) = \sqrt{{\left(\frac{\partial g \left(x, y\right)}{\partial x}\right)}^{2} + {\left(\frac{\partial g \left(x, y\right)}{\partial y}\right)}^{2}} + T \left(\frac{\frac{\partial g \left(x, y\right)}{\partial y}}{\frac{\partial g \left(x, y\right)}{\partial x}}\right) ;$
where, G(x, y) represents a gradient amplitude value of a pixel point (x,y), g(x, y) represents a grayscale value of the pixel point (x,y), $\frac{\partial g \left(x, y\right)}{\partial x}$ represents a gradient of the pixel point (x,y) in an x direction, $\frac{\partial g \left(x, y\right)}{\partial y}$ represents a gradient of the pixel point (x,y) in a y direction, and T( ) represents a direction conversion function;
based on gradient of each of the pixel points in the first image, convolution operation is performed in combination with a preset convolution kernel to obtain smooth pixel points, and a second image is formed based on all the smooth pixel points;
an adjacent pixel group of the second image with each preset size is scanned by using a gradient factor, and if gradient of one of the pixel points in the adjacent pixel group is not a local maximum value, gradient of a corresponding pixel point is suppressed to 0 to obtain extreme value pixel points;
pattern images of the target tire are formed based on all extreme value pixel points.

In this embodiment, the image acquisition device is a device for capturing the images of the target tire, such as a digital camera, an industrial camera or a laser scanner.

In this embodiment, the tire tread original image is the original image data of the tire surface obtained by the image acquisition device.

In this embodiment, grayscale processing is a basic operation in image processing, which refers to the process of converting a color image into a grayscale image.

In this embodiment, the first image refers to the tire tread original image of the target tire after grayscale processing.

In this embodiment, the standard coordinate system refers to a mathematical reference frame for determining the position of each pixel in the image.

In this embodiment, Gaussian filtering processing is a technique commonly used in image processing to denoise and blur the image, and the image is smoothed and noise is reduced by convolution with Gaussian function.

In this embodiment, the gradient refers to the rate at which the grayscale value of the image pixel changes with the spatial position.

In this embodiment, the direction conversion function is to convert the gradient information of a pixel point from one coordinate system to another.

In this embodiment, the preset convolution kernel refers to a predefined matrix used in convolution operation for processing pixel points in the image.

In this embodiment, smoothing pixel points refers to the pixel points after noise in the image is reduced by filtering convolution operation.

In this embodiment, the second image is an image generated based on the original first image and convolution kernel operation after Gaussian filtering and smoothing processing.

In this embodiment, the gradient factor represents the intensity coefficient of the grayscale change at a certain point in the image.

In this embodiment, the preset size refers to a fixed size of the used region in image processing.

In this embodiment, the adjacent pixel group refers to a local region in the process of image processing, which is composed of several pixel points around a specific pixel point in the image.

In this embodiment, the local maximum value means that the grayscale value or gradient value of the pixel point is the largest relative to the grayscale values of surrounding other pixels within the neighborhood of the pixel point.

In this embodiment, extreme value pixel points refer to pixel points that satisfy local maximum value suppression after scanning by gradient factors.

In this embodiment, the pattern image represents significant texture features in the tire tread of the tire.

The working principle and beneficial effects of the above technical scheme are as follows: the pattern image of the target tire is extracted by image processing technology, and the tire tread pattern features are accurately identified and extracted by grayscale processing, Gaussian filtering, gradient calculation and convolution operation, which improves the accuracy of tire pattern analysis and is helpful to optimize tire design and performance evaluation.

### Embodiment 4

On the basis of the above Embodiment 1, longitudinally partitioning a tire tread of the target tire to obtain five tire tread regions, and numbering each of the tire tread regions include:
according to the basic parameters of the target tire, the pattern images are divided into a left shoulder, a right shoulder and a central pattern, and the left shoulder and the right shoulder are respectively regarded as a first region and a second region;
symmetry analysis is performed on the central pattern, where the symmetry analysis includes central symmetry analysis and axial symmetry analysis;
based on distribution and symmetry of the central pattern, the central pattern is divided from a central point of a central pattern image to both sides;
according to a preset center width and preset both sides widths, the central pattern is symmetrically divided into a left image, a central image and a right image, a third region, a fourth region and a fifth region are regarded respectively.

In this embodiment, the shoulder refers to the regions on both sides of the tire tread of the tire, which is a transition region connecting the central part of the tire and the sidewall of the tire.

In this embodiment, the central pattern is the pattern region of the middle part of the tire tread of the tire, which is usually located in the right center of the tire.

In this embodiment, the first region is the left partial region of the tire shoulder.

In this embodiment, the second region is the right partial region of the tire shoulder.

In this embodiment, the symmetry analysis includes central symmetry analysis and axial symmetry analysis, where central symmetry means that the image is symmetric around a central point and that the image is symmetric around a central axis.

In this embodiment, the preset center width refers to the preset width of the "central pattern" region in the tire pattern image.

In this embodiment, the preset both-sides width refers to the preset width of both sides around the central pattern in the tire pattern image, and the widths of both sides are equal.

In this embodiment, the third region is located on the left side of the image, which is a part divided from the center point of the tire pattern image to the left.

In this embodiment, the fourth region is located in the center of the image.

In this embodiment, the fifth region is located on the right side of the image, which is a part divided from the center point of the tire pattern image to the right side.

The working principle and beneficial effects of the above technical scheme are as follows: by performing region division and symmetry analysis on the target tire pattern image, the central pattern may be accurately identified and divided into left, center and right regions, which is helpful to analyze the tire pattern characteristics in detail and provide support for tire performance evaluation.

### Embodiment 5

On the basis of the above Embodiment 1, respectively measuring rolling resistance values of left, right, shoulder and middle tire pattern regions in groups based on a rolling resistance testing device and shielding materials includes:
materials with performance meeting preset standards are selected as the shielding materials;
the shielding materials are cut based on a preset central width, a preset unilateral width and a shoulder width to obtain a first material;
the first region and the third region of the target tire are shielded with the first material to obtain a tire measurable right region, and a rolling resistance test is performed on the tire measurable right region to obtain a first rolling resistance value;
the second region and the fifth region of the target tire are shielded with the first material to obtain the tire measurable left region, and a rolling resistance test is performed on the tire measurable left region to obtain a second rolling resistance value.

In this embodiment, the shoulder width refers to the width of the region related to the shoulder outside the tire in the tire pattern image.

In this embodiment, the first material refers to the material obtained by cutting the shielding material according to the preset central width, unilateral width and shoulder width.

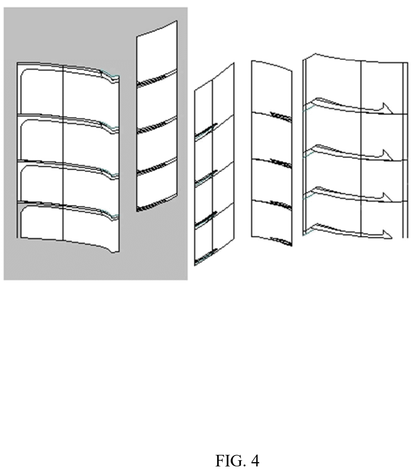

In this embodiment, the tire measurable right region is shown in the unshaded part of FIG. 4.

In this embodiment, the first rolling resistance value refers to the result of rolling resistance test in the tire measurable right region.

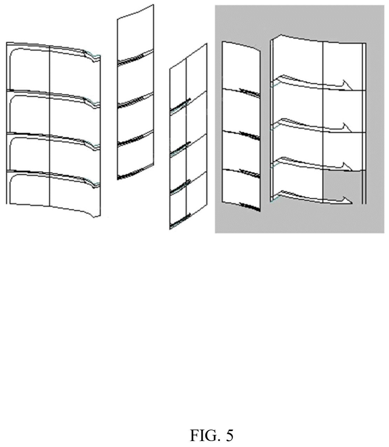

In this embodiment, the tire measurable left region is shown in the unshaded part of FIG. 5.

In this embodiment, the second rolling resistance value refers to the result of rolling resistance test in the tire measurable left region.

The working principle and beneficial effects of the above technical scheme are as follows: by cutting shielding materials and shielding different regions of the tire respectively, the rolling resistance test is performed to obtain the rolling resistance values of the tire left and right regions. This method is helpful to evaluate the influence of different regions on tire rolling resistance performance and provide basis for optimizing tire design.

### Embodiment 6

On the basis of the above Embodiment 1, respectively measuring rolling resistance values of left, right, shoulder and middle tire pattern regions in groups based on a rolling resistance testing device and shielding materials further includes:
the shielding materials are cut according to the preset central width, a preset both-sides total width and the shoulder width to obtain a second material;
the first region, the third region, the fourth region and the fifth region of the target tire are shielded with the second material to obtain a tire measurable right shoulder region, and a rolling resistance test is performed on the tire measurable right shoulder region to obtain a third rolling resistance value;
the second region, the third region, the fourth region and the fifth region of the target tire are shielded with the second material to obtain a tire measurable left shoulder region, and a rolling resistance test is performed on the tire measurable left shoulder region to obtain a fourth rolling resistance value;
the shielding materials are cut according to the preset central width, the preset both-sides total width and the shoulder width to obtain a third material;
the first region, the second region, the third region and the fifth region of the target tire are shielded with the third material to obtain a tire measurable central region, and a rolling resistance test is performed on the tire measurable central region to obtain a fifth rolling resistance value.

In this embodiment, the second material is obtained by cutting the shielding materials according to the preset central width, the preset both-sides total width and the shoulder width.

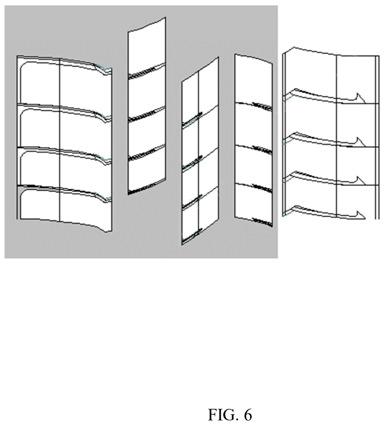

In this embodiment, the tire measurable right shoulder region is shown as the unshaded region in FIG. 6.

In this embodiment, the tire measurable left shoulder region is the symmetrical edge of FIG. 6.

In this embodiment, the third rolling resistance value is the value obtained by rolling resistance test in the tire measurable right shoulder region.

In this embodiment, the fourth rolling resistance value is the value obtained by rolling resistance test in the tire measurable left shoulder region.

In this embodiment, the third material is obtained by cutting the shielding materials according to the preset central width, the preset both-sides total width and the shoulder width.

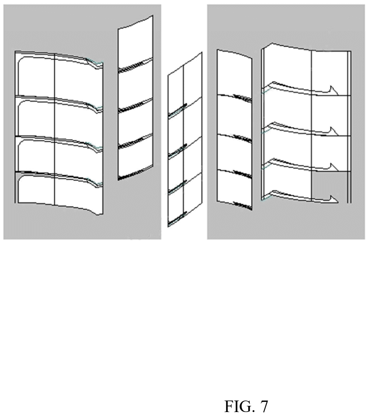

In this embodiment, the tire measurable central region is shown as the unshaded region in FIG. 7.

In this embodiment, the fifth rolling resistance value is the obtained rolling resistance test value of the tire measurable central region.

The working principle and beneficial effects of the above technical scheme are as follows: by cutting different shielding materials, the rolling resistance of each region of the tire is tested respectively, and the rolling resistance values of different regions are obtained. This method is helpful to comprehensively evaluate the rolling resistance performance of tires in different regions, and provides data support for optimizing tire design and improving performance.

### Embodiment 7

On the basis of the above Embodiment 6, evaluating resistance of the target tire according to the rolling resistance values combined with tire patterns includes:
according to five rolling resistance values of the target tire, the resistance of the target tire is calculated by combining the tire patterns:
   $C = \frac{{C}_{rr} \left(v\right) \times \left(1+k\times \frac{v}{{v}_{0}}\right) + {\sum }_{i = 1}^{5} {σ}_{i} \left({C}_{rr , 0}\times \left(1+α\times {Df}_{i}\right)+f\left(N\right)\right)}{2} ;$
where, C represents the resistance of the target tire, σᵢ represents a preset weight coefficient of an i-th rolling resistance value, C_{rr,0} represents a standard tire rolling resistance coefficient, α represents an influence factor of tire material on rolling resistance values, Dfᵢ represents a pattern proportion of the i-th rolling resistance value corresponding to a rolling resistance region, N represents a rated load gravity of the target tire, f( ) represents a load function, Cᵣᵣ(v) represents a rolling resistance coefficient corresponding to speed v in the rolling resistance testing device, k represents a conversion coefficient related to a speed ratio, and v₀ represents a specified standard speed of the target tire;
if the resistance of the target tire is greater than a preset resistance, the tire patterns of the target tire are determined to be unqualified, otherwise, the tire patterns of the target tire are determined to be qualified.

In this embodiment, the resistance refers to the rolling resistance of the target tire under certain conditions (speed, load, tire pattern).

In this embodiment, the standard tire rolling resistance coefficient refers to the rolling resistance coefficient generated by an idealized tire under specific conditions.

In this embodiment, the influence factor refers to the contribution degree of the pattern design to the rolling resistance when calculating the rolling resistance of the target tire.

In this embodiment, the load function is a function used to describe the influence of load on rolling resistance in tire testing and evaluation.

In this embodiment, the pattern proportion of the rolling resistance region refers to the proportion of the pattern region directly related to the rolling resistance in the tire surface.

In this embodiment, the preset resistance refers to the maximum allowable rolling resistance that the target tire should reach according to certain standards or requirements when designing and evaluating the tire.

The working principle and beneficial effects of the above technical scheme are as follows: the comprehensive resistance of the target tire is calculated by combining factors such as five rolling resistance values, pattern proportion and load. If the resistance exceeds the preset value, the tire pattern is determined to be unqualified, which is helpful to ensure that the tire performance meets the requirements and improve the scientificity and accuracy of tire design.

### Embodiment 8

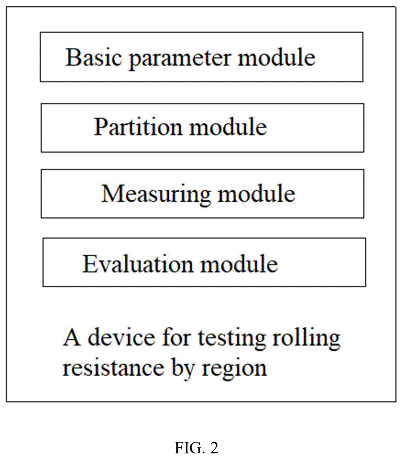

As shown in FIG. 2, a device for testing rolling resistance by region is provided, and includes:
a basic parameter module, configured for selecting a target tire as a test sample, and obtaining basic parameters of the target tire;
a partition module, configured for longitudinally partitioning a tire tread of the target tire to obtain five tire tread regions, and numbering each of the tire tread regions;
a measuring module, configured for respectively measuring rolling resistance values of left, right, shoulder and middle tire pattern regions in groups based on a rolling resistance testing device and shielding materials; and
an evaluation module, configured for evaluating resistance of the target tire according to the rolling resistance values.

The working principle and beneficial effects of the above technical scheme are as follows: the tire tread of the tire is divided into regions, and the rolling resistance value of each region is measured by rolling resistance testing device, and the tire resistance is evaluated by combining the pattern characteristics, so that the tire performance may be accurately analyzed, the design may be optimized, and the fuel efficiency and performance may be improved, which has obvious energy saving and environmental benefits.

Finally, it should be explained that the above embodiments are only used to illustrate the technical scheme of the disclosure, but not to limit it. Although the disclosure has been described in detail with reference to the foregoing embodiments, those skilled in the art should understand that it is still possible to modify the technical scheme described in the foregoing embodiments, or to replace some technical features with equivalents. However, these modifications or substitutions may not make the essence of the corresponding technical solutions deviate from the spirit and scope of the technical solutions of various embodiments of the disclosure.

## Claims

1. A method for testing rolling resistance by region, comprising:
S1, selecting a target tire as a test sample, and obtaining basic parameters of the target tire;
S2, longitudinally partitioning a tire tread of the target tire to obtain five tire tread regions, and numbering each of the tire tread regions;
S3, based on a rolling resistance testing device and shielding materials, respectively measuring rolling resistance values of left, right, shoulder and middle tire pattern regions in groups; and
S4, evaluating resistance of the target tire according to the rolling resistance values combined with tire patterns.

2. The method for testing rolling resistance by region according to claim 1, wherein selecting a target tire as a test sample and obtaining basic parameters of the target tire comprise:
determining a test target and selecting tire types according to the test target;
selecting a representative target tire as the test sample among the tire types;
obtaining the basic parameters of the target tire according to factory information of the target tire.

3. The method for testing rolling resistance by regions according to claim 1, wherein before the longitudinally partitioning a tire tread of the target tire comprises:
obtaining a tire tread original image of the target tire based on an image acquisition device;
performing grayscale processing on the tire tread original image to obtain a first image, and mapping the first image into a standard coordinate system;
performing Gaussian filtering on the first image, and obtaining gradient of each of pixel points: 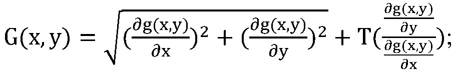
wherein, G(x, y) represents a gradient amplitude value of a pixel point (x,y), g(x, y) represents a grayscale value of the pixel point (x,y), $\frac{\partial g \left(x, y\right)}{\partial x}$ represents a gradient of the pixel point (x,y) in an x direction, $\frac{\partial g \left(x, y\right)}{\partial y}$ represents a gradient of the pixel point (x,y) in a y direction, and T( ) represents a direction conversion function;
based on gradient of each of the pixel points in the first image, performing convolution operation in combination with a preset convolution kernel to obtain smooth pixel points, and forming a second image based on all the smooth pixel points;
scanning an adjacent pixel group of the second image with each preset size by using a gradient factor, and if gradient of one of the pixel points in the adjacent pixel group is not a local maximum value, suppressing gradient of a corresponding pixel point to 0 to obtain extreme value pixel points;
forming pattern images of the target tire based on all extreme value pixel points.

4. The method for testing rolling resistance by region according to claim 1, wherein longitudinally partitioning a tire tread of the target tire to obtain five tire tread regions, and numbering each of the tire tread regions comprise:
according to the basic parameters of the target tire, dividing the pattern images into a left shoulder, a right shoulder and a central pattern, and respectively regarding the left shoulder and the right shoulder as a first region and a second region;
performing symmetry analysis on the central pattern, wherein the symmetry analysis comprises central symmetry analysis and axial symmetry analysis;
based on distribution and symmetry of the central pattern, dividing the central pattern from a central point of a central pattern image to both sides;
according to a preset center width and preset both sides widths, symmetrically dividing the central pattern into a left image, a central image and a right image, regarding as a third region, a fourth region and a fifth region respectively.

5. The method for testing rolling resistance by region according to claim 4, wherein respectively measuring rolling resistance values of left, right, shoulder and middle tire pattern regions in groups based on a rolling resistance testing device and shielding materials comprises:
selecting materials with performance meeting preset standards as the shielding materials;
cutting the shielding materials based on a preset central width, a preset unilateral width and a shoulder width to obtain a first material;
shielding the first region and the third region of the target tire with the first material to obtain a tire measurable right region, and performing a rolling resistance test on the tire measurable right region to obtain a first rolling resistance value;
shielding the second region and the fifth region of the target tire with the first material to obtain the tire measurable left region, and performing a rolling resistance test on the tire measurable left region to obtain a second rolling resistance value.

6. The method for testing rolling resistance by region according to claim 5, wherein respectively measuring rolling resistance values of left, right, shoulder and middle tire pattern regions in groups based on a rolling resistance testing device and shielding materials further comprises:
cutting the shielding materials according to the preset central width, a preset both-sides total width and the shoulder width to obtain a second material;
shielding the first region, the third region, the fourth region and the fifth region of the target tire with the second material to obtain a tire measurable right shoulder region, and performing a rolling resistance test on the tire measurable right shoulder region to obtain a third rolling resistance value;
shielding the second region, the third region, the fourth region and the fifth region of the target tire with the second material to obtain a tire measurable left shoulder region, and performing a rolling resistance test on the tire measurable left shoulder region to obtain a fourth rolling resistance value;
cutting the shielding materials according to the preset central width, the preset both-sides total width and the shoulder width to obtain a third material;
shielding the first region, the second region, the third region and the fifth region of the target tire with the third material to obtain a tire measurable central region, and performing a rolling resistance test on the tire measurable central region to obtain a fifth rolling resistance value.

7. The method for testing rolling resistance by region according to claim 6, wherein evaluating resistance of the target tire according to the rolling resistance values combined with tire patterns comprises:
according to five rolling resistance values of the target tire, calculating the resistance of the target tire by combining the tire patterns: $C = \frac{{C}_{rr} \left(v\right) \times \left(1+k\times \frac{v}{{v}_{0}}\right) + {\sum }_{i = 1}^{5} {σ}_{i} \left({C}_{rr , 0}\times \left(1+α\times {Df}_{i}\right)+f\left(N\right)\right)}{2} ;$
wherein, C represents the resistance of the target tire, σᵢ represents a preset weight coefficient of an i-th rolling resistance value, C_{rr,0} represents a standard tire rolling resistance coefficient, α represents an influence factor of tire material on rolling resistance values, Dfᵢ represents a pattern proportion of the i-th rolling resistance value corresponding to a rolling resistance region, N represents a rated load gravity of the target tire, f( ) represents a load function, Cᵣᵣ(v) represents a rolling resistance coefficient corresponding to speed v in the rolling resistance testing device, k represents a conversion coefficient related to a speed ratio, and v₀ represents a specified standard speed of the target tire;
if the resistance of the target tire is greater than a preset resistance, the tire patterns of the target tire are determined to be unqualified, otherwise, the tire patterns of the target tire are determined to be qualified.

8. A device for testing rolling resistance by region, comprising:
a basic parameter module, configured for selecting a target tire as a test sample, and obtaining basic parameters of the target tire;
a partition module, configured for longitudinally partitioning a tire tread of the target tire to obtain five tire tread regions, and numbering each of the tire tread regions;
a measuring module, configured for respectively measuring rolling resistance values of left, right, shoulder and middle tire pattern regions in groups based on a rolling resistance testing device and shielding materials; and
an evaluation module, configured for evaluating resistance of the target tire according to the rolling resistance values.
